# EUROPÄISCHE PATENTSCHRIFT

(11) **EP 1 075 345 B1**
(45) Veröffentlichungstag und Bekanntmachung des Hinweises auf die Patenterteilung: **04.06.2003**
(21) Anmeldenummer: 99912009.0
(22) Anmeldetag: 22.04.1999
(51) Int. Cl.: B23K 9/028

(54) **EINRICHTUNG ZUM VERSCHWEISSEN VON ZYLINDERFÖRMIGEN WERKSTÜCKEN**
DEVICE FOR WELDING CYLINDRICAL WORKPIECES
DISPOSITIF POUR SOUDER DES PIECES CYLINDRIQUES

(30) Priorität: 28.04.1998 CH 95498
(43) Veröffentlichungstag der Anmeldung: 14.02.2001
(73) Patentinhaber: EFES TEX AG, CH-6901 Lugano (CH)
(72) Erfinder: LARIKKA, Leo, FIN-01600 Vantaa (FI)
(74) Vertreter: Heusch, Christian
(86) Internationale Anmeldenummer: IB9900717
(87) Internationale Veröffentlichungsnummer: WO99055486

(56) Entgegenhaltungen:
- WO-A-92/20488
- FR-A- 1 294 275
- US-A- 5 310 982

## Beschreibung

Die Erfindung betrifft eine Einrichtung zum verschweissen von zylinderförmigen werkstücken gemâß dem Oberbegriff des Anspruchs 1. Eine derartige Einrichtung ist aus der FR-A-1 294 275 bekannt. Beim Verschweissen von zylinderförmigen Werkstücken haben die Verbindungsflächen in der Regel zwei Arten von Formen. Bei quer zur Längsachse durchgetrennten zylinderförmigen Werkstücken treffen die Enden gerade aufeinander und die Stoßfläche bildet einen Kreis. Bei dieser Art der Schweißverbindung handelt es sich um eine Rotationsschweißverbindung, die leicht zu mechanisieren ist. Treffen die Zylinder in einem bestimmten Winkel aufeinander, wird an der Stoßfläche eine geometrische Figur gebildet, deren Form von den Durchmessern der Zylinder und dem Winkel, in dem die Mittellinien der Zylinder aufeinandertreffen, abhängt.

Gibt es mehrere solcher verzweigter Zylinder, sprich Rohrabzweigungen, an einem Grundzylinder, die außerdem noch nahe beieinander liegen, ist ein herkömmliches Verschweißen von außen schwierig. Bei derartigen Konstruktionen kann es sich z.B. um die Gehäuse von Mehrwegventilen, Filterkörper, Rohrabzweigungen und entsprechende Konstruktionsteile handeln. Beim Schweißen von Rohrabzweigungen und insbesondere von T-Abzweigungen stellen die geringe Hohe der Aushalsung am Grundzylinder und die Größe herkömmlicher Schweissdüsen Probleme dar.

Die o.a. Probleme können eliminiert werden, indem man sich der Schweißstelle des Zweigzylinders von innen nähert. Dabei bilden die geringe Hohe der Aushalsung oder eine zweite, in der Nähe, außen befindliche Abzweigung kein Hindemis dar. Die Schweißdüse ist auf Höhe der Naht, während sich das Werkstück (oder die Schweißdüse) um die eigene Achse dreht.

Ein zweiter Problembereich sind lange Werkstücke, deren Rotation nicht einfach zu bewerkstelligen ist. Ein typisches Beispiel dafür ist, wenn aus einem Rohr Verteilerkammem gemacht werden sollen, wobei an ein langes Rohr mehrere Rahrabzweigungen angebracht werden.

Die koachsiale Ausrichtung der Zylinder gegeneinander ist von äußerst großer Bedeutung. Um die Qualität der Schweißnaht zu gewährleisten, müssen die zu verschweissenden Werkstücke vor dem Sauerstoff in der Luft geschützt werden, indem die Werkstücke in eine mit Schutzgas gefüllte Kammer geschlossen werden. Um die Menge des Schutzgases und die Füllzeit zu minimieren, muß die Kammer möglichst klein sein. Die geringe Grösse der Kammer aber verursacht wiederum Probleme beim Einsetzen des Werkstücks in die in der Kammer befindliche Halterung. Wegen der geringen Große der Kammer kann man nicht gleichzeitig mit den Händen in der Kammer arbeiten und in die Kammer hineinschauen.

Der Erfindung liegt die Aufgabe zugrunde, eine Einrichtung zu schaffen, mit der obenbeschriebene Probleme beseitigt werden können und im besonderen mit der der Schutzgasverbrauch vermindert werden kann, auch wenn die Grösse der zu verschweissenden Werkstücke variiert.

Diese Aufgabe wird auf Grund der im nachstehenden Patentanspruch **1** vorgebrachten Merkmale erfüllt. In den untergeordneten Patentansprüchen sind vorteilhafte Ausführungsformen der Erfindung vorgebracht.

Im folgenden wird ein Ausführungsbeispiel der Erfindung näher veranschaulicht unter Hinweis auf die beigelegten Zeichnungen. Es zeigen
- **Fig. 1**: eine Einrichtung nach der Erfindung von der Seite gesehen, wobei die Portion oberhalb der Mittellinie in Längsschnitt dargestellt ist;
- **Fig. 2**: näher ein Beispiel für die Schutzkammer, wie sie in einer Einrichtung nach **Fig. 1** vorgesehen ist, und für die in der Schutzkammer untergebrachte, für die zu verschweissenden Werkstücke vorgesehene Befestigungskassette; und
- **Fig. 3**: schemenhaft eine der **Fig. 2** entsprechende Kombination von Schutzkammer und Befestigungskassette von der Stimseite, also in der Achsialrichtung der Einrichtung, gesehen.

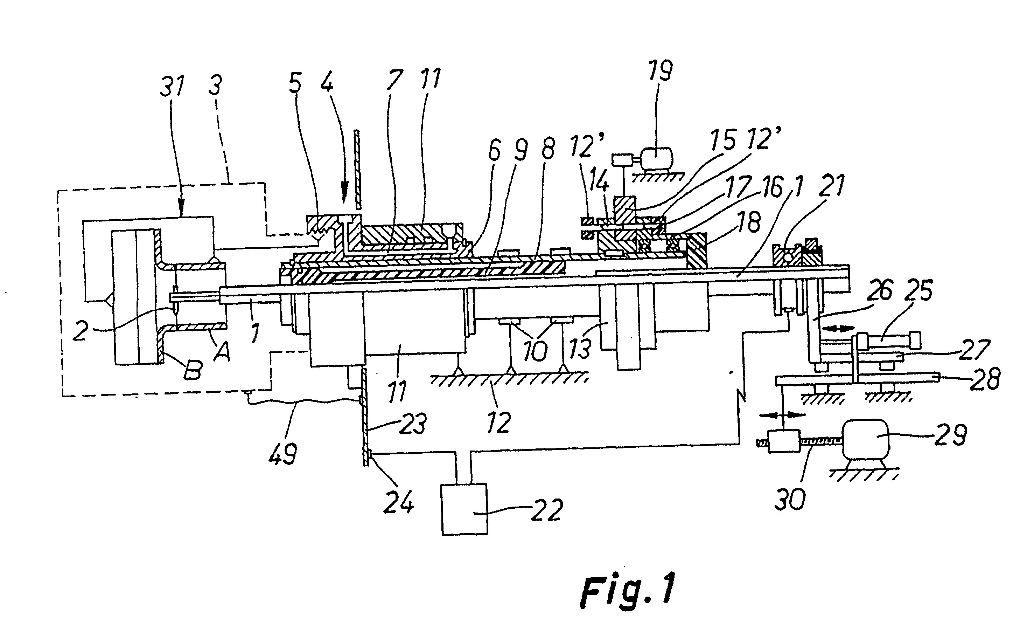

Zu der in **Fig. 1** gezeigten Einrichtung gehört eine Rohrachse **8**, die mit Lagern **10** hinsichtlich des Gerüstes **12** drehbar gelagert ist. Der Tragschaft **1** der Schweißelektrode **2** ist eine lange Achse, die konzentrisch mit der Rohrachse **8** sich durch die Rohrachse **8** hindurchersteckt. Zwischen dem Elektrodenschaft **1** und der Rohrachse **8** ist ein *Is*oliermaterialrohr **9** vorgesehen, das als Lagerung zwischen diesen Teilen dient. Der Elektrodenschaft **1** und die Rohrachse **8** sind also einander gegenüber drehbar, und außerdem kann der Elektrodenschaft **1** in der Achsialrichtung bewegt werden.

Die Rohrachse **8** ist von einem sich zusammen mit ihr drehenden Hülsenteil **6** umgeben, in dem Schutzgaskanäle **7** gebildet sind und der an einer Erweiterung, die einen Anschlußkopf 4 bildet, endet. Die Hülse 6 erstreckt sich nur auf einen Anteil der Länge der Rohrachse **8**. Neben dem Anschlußkopf **4** ist die Hülse **6** von einem undrehbaren Gerüsthülse **11** umgeben, die am Gerüst **12** befestigt ist, um dessen Rotation zu verhindern. Diese Gerüsthülse **11** hat die erforderlichen Anschlüsse für das Schutzgas, das Kühlgas und die für den Schließzylinder der Schutzkammer **3** erforderliche Druckluft. Zwischen den Hülsen **6** und **11** sind drehbare Anschlüsse zur Bildung der erforderlichen Gasverbindungen an die in der Hülse **6** vorgesehenen Kanäle **7**, die am Anschlußkopf **4** enden. In **Fig. 1** ist nur ein Kanal **7** gezeigt, aber dieser Kanäle gibt es natürlich mehrere, am Umfang der Hülse **11** und des Anschlußkopfes **4** geeigneterweise verteilt.

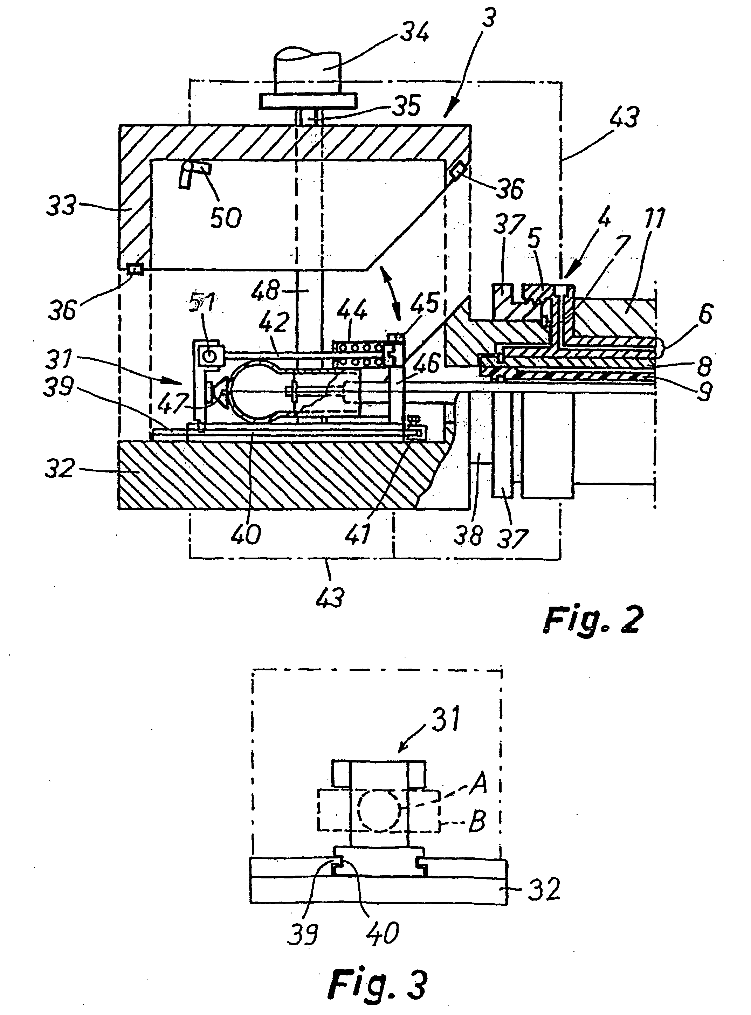

Am Anschlußkopf **4** ist eine Gewindebuchse **5** mit Innengewinde vorgesehen, an der die Schutzkammer **3** mittels Gewindeanschluß angeschlossen werden kann. Auch die Positionierungs- und Befestigungsmittel **31** für die zu verschweissenden Teile A, B werden an der Gewindebuchse **5** des Anschlußkopfes **4** befestigt. Dies ist in **Fig. 1** nur schematisch gezeigt. In **Fig. 2** ist genauer ein Ausführungsbeispiel gezeigt, worin der Bodenteil **32** der Schutzkammer 3 mit einem vorspringendem Hals **38** versehen ist, der von einer Gewindehülse **37** umgeben ist, mittels derer die Kammer **3** an der Gewindebuchse **5** befestigt werden kann. Der Oberteil **33** der Kammer **3** läßt sich mit der Stange **35** des Kolbens eines Zylinders **34** schließen. Der Oberteil **33** wird an Vertikalführungen **48** geführt, deren Oberenden am Zylinder **34** befestigt sind. Mit Dichtungen **36** wird sichergestellt, dass die geschlossene Kammer **3** dicht ist.

Die für die zu verschweissenden Werkstücke vorgesehene Befestigungskassette **31** wird, von auf dem Boden der Kammer befindlichen Führungen **39** geführt, in die Kammer **3** geschoben. Die Führungen **39** verlaufen parallel zur Achsialrichtung des Elektrodenschafts **1**, wobei die Kassette in der Achsialrichtung des Elektrodenschafts in die dafür vorgesehene Position gleitet. An den Rändern des Bodens der Befestigungskassette **31** sind Nuten **40** für die Führungen **39** gebildet. Die zu verschweissenden Werkstücke werden richtig positioniert hinsichtlich der Schweißelektrode **2**. Für die in der Achsialrichtung erfolgende Positionierung ist am Ende der Führungen **39** ein Stopper **41** vorgesehen, der fest sein kann oder achsial einstellbar. An der Decke der Kammer ist ein federbelastetes Druckelement **50** angeordnet, das, wenn sich der Oberteil der Kammer gesenkt hat, auf die Hinterecke der Kassette **31** trifft, auf ihre Ober- und Hinterseite, die Kassette **31** fest an Ort und Stelle haltend.

Im dargestellten Fall gehören zur Befestigungskassette **31** Arme **42**, die sich um einen Gelenkpunkt **51** schwenken lassen, welche Arme an den Enden einen federbelasteten Arretierungsteil **45** haben, der an die Kassette hinter dem Oberrand ihrer Stimseite **46** greift. Vom Arretierungsteil **45** springen Hülsen **44** vor, welche Hülsen Federn enthalten, die zwischen den Boden der Hülsen **44** und den Enden der Arme **42** gedrückt sind. Wenn der Arretierungsteil **45** in **Fig. 2** nach rechts, gegen die Kraft der Federn, gezogen wird, lassen sich die Arme **42** um die Achse **51** nach oben schwenken.

Die zu verschweissenden Werkstücke werden in die Kassette **31** gelegt, wenn sie sich außerhalb der Kammer **3** befindet. Typischerweise gibt es der Kassetten **31** zwei pro Kammer **3**, so daß wenn sich die eine Kassette **31** in der Kammer **3** befindet, die andere Kassette **31** mit zu verschweissenden Teilen gefüllt werden kann. Eine Regulierschraube **47** bestimmt die Position der Teile, und die nach unten geschwenkten Arme **42** arretieren die zu verschweissenden Teile an Ort und Stelle. Da sowohl die Schutzkammer **3** als auch die Befestigungskassette **31** austauschbar sind, können sie auf ein Mindestmaß dimensioniert werden für die jeweilige Werkstückgrösse, was den Schutzgasverbrauch auf ein Minimum reduziert.

Der Antrieb **19** treibt ein Antriebsrad **15** an, das mit Schaltspindeln **14** und **17** so arretierbar ist, daß es wahlweise entweder ein an die Rohrachse **8** greifendes Antriebsrad **13** oder ein an der Rohrachse **8** drehbar gelagertes Antriebsrad **16**, der Ober einen Isoliermaterialflansch **19** an den Elektrodenschaft **1** greift, dreht. Wenn von den Antriebsrädem **13** und **16** das eine aktiviert ist, bleibt das andere am Gerüst **12'** undrehbar arretiert. Im gezeigten Fall schaltet die Schalspindel **14** den Drehantrieb auf die Rohrachse **8** und arretiert den Elektrodenschaft **1** undrehbar. Dabei drehen sich zusammen mit der Rohrachse **8** der Anschlußkopf **4** und die an ihm befestigte Kammer **3** mit Befestigungskassette **31**. Die zu verschweissenden Teile A,B drehen sich hinsichtlich der Schweisselektrode **2**. Da die Gasverbindungen an den drehbaren Anschlußkopf **4** gebracht sind, können sie mittels Schläuche **43** an der Kammer **3** angeschlossen werden, wie in **Fig. 2** gezeigt ist.

Wenn eine von zwei Zylindern gebildete geometrische Form geschweißt wird, muß die Schweißelektrode **2** der gebogenen Form der Verbindungsstelle folgen. Dies wird mit einer von einem Motor **29** angetriebenen Gewindeachse **30** erzielt, die eine Horizontatführung **28** verschiebt, die wiederum die von einem Zylinder **25** und einem Arm **26** gebildete Ganzheit verschiebt Der Arm **26** haftet am Elektrodenschaft **1**, dessen lange Schneilbewegung mit dem Zylinder **25** verwirklicht werden kann, der den Arm **26** und eine Horizontalführung **27** hinsichtlich der Horizontalführung **28** bewegt. Zweck der Schellbewegung ist, die Elektrode **2** in die Arbeitsposition und wieder weg davon zu fahren, während mit dem Motor **29** die während des Schweissens erfolgende Präzisionsbewegung, der gebogenen Form der Verbindungsstelle zu folgen, verwirklicht wird. Der Präzisionsverschiebemotor **29** ist programmatisch gesteuert, seine Verschiebebewegung abhängig von der Drehbewegung der Rohrachse **8** durchzuführen.

Der Schweissstrom wird an die Schweißstelle aus einer Stromquelle **22** gebracht, die über ein Stromkabel an einem am Schaft **1** befestigten Gleitring **21** angeschlossen ist. Das Erdungskabel ist an einem Gleitring **24**, der sich an einem Flansch **23** befindet, angeschlossen. Es gibt eine elektrische Verbindung **49** vom Flansch **23** zur Schutzkammer **3** und weiter zu der darin befestigten Befestigungskassette **31**. Die isolierende Lagerhülse **9** und der isolierende Flansch **18** stellen sicher, daß die an den Schaft **1** angelegte Spannung nicht auf andere Teile der Einrichtung übergeht.

Die Erfindung ist nicht auf das obige Ausführungsbeispiel beschränkt. Im besonderen können Konstruktion und Formgebung der Schutzkammer **3** und der damit verbundenen Positionierungs- und Befestigungsmittel **31** auf vielfache Weise variieren. Das Wesentliche ist, daß sie beide mit den gleichen Greifelementen **5** am Anschlußkopf **4** befestigt werden, wobei sie zusammen austauschbar sind gegen solche Kammern und Positionierungs- und Befestigungsmittel, die den jeweils zu verschweissenden Rohrteilen in Form und Dimensionierung angepaßt sind.

## Patentansprüche

1. Einrichtung zum Verschweißen von zylinderförmigen Teilen und Rotationskörpern, zu welcher Einrichtung gehören:
- ein Elektrodenschaft (**1**), der eine den Schweißstrom zur Schweißelektrode (**2**) bringende Achse ist;
- Positionierungs- und Befestigungsmittel (**31**) für die zu verschweissenden Teile (A, B); und
- eine den Elektrodenschaft (**1**) umgebende Rohrachse (**8**), die hinsichtlich sowohl des Gerüstes (**11**, **12**) als auch des Elektrodenschafts (**1**) drehbar gelagert (**10**) ist,
**dadurch gekennzeichnet,**
**daß** an der Rohrachse (**8**) ein Anschlusskopf (**4**) befestigt ist, der mit Greifelementen (**5**) für eine austauschbare Schutzkammer (**3**) versehen ist, daß die austauschbaren Positionierungs- und Befestigungsmittel (**31**) in Verbindung mit der Schutzkammer (**3**) so angeordnet sind, daß sie am Anschlusskopf (**4**) mit den gleichen Greifelementen (**5**) wie die Schutzkammer befestigt werden, und daß zur Einrichtung außerdem folgendes gehört:
- Mittel (**13, 14, 15, 19**) zur Drehung der Rohrachse (**8**) zusammen mit dem Anschlusskopf (**4**) und der an ihm angeschlossenen Schutzkammer (**3**) und den Positionierungs- und Befestigungsmitteln (**31**);
- Mittel (**12', 17, 16, 18**) zur Arretierung des Elektrodenschafts (**1**), so daß er während der Drehung der Rohrachse (**8**) undrehbar ist; und
- Mittel (**25-30**) zum Bewegen des Elektrodenschafts (**1**) achsial hinsichtlich der Rohrachse (**8**).

2. Einrichtung nach Patentanspruch **1**,
**dadurch gekennzeichnet,**
**daß** sich die genannten Positionierungs- und Befestigungsmittel (**31**) in der Schutzkammer (**3**) befinden.

3. Einrichtung nach Patentanspruch **2**,
**dadurch gekennzeichnet,**
**daß** zu den Positionierungs- und Befestigungsmitteln (**31**) eine austauschbare Befestigungskassette gehört und in der Schutzkammer (**3**) Greif- und Positionierungsglieder (**39, 41, 50**) für die austauschbare Befestigungskassette (**31**) vorgesehen sind.

4. Einrichtung nach Patentanspruch **3**,
**dadurch gekennzeichnet,**
**dass** zu den Greif- und Positionierungsgliedern Führungen (**39**) gehören, an denen die Befestigungskassette (**31**) in die Schutzkammer (**3**) in der Achsialrichtung des Elektrodenschafts (**1**) in die dafür vorgesehene Position geschoben werden kann.

5. Einrichtung nach Patentanspruch **1**,
**dadurch gekennzeichnet,**
**daß** zur Einrichtung Mittel (**15-19**) gehören, mit denen der Elektrodenschaft (**1**) gedreht wird, während andere Mittel (**12', 13, 14**) die Rohrachse (**8**) undrehbar schalten.

6. Einrichtung nach Patentanspruch **1**,
**dadurch gekennzeichnet,**
**dass** am Anschlusskopf (**4**) eine Gewindebuchse (**5**) vorgesehen ist, an der eine von der Schutzkammer (**3**) vorspringende Gewindehülse (**38, 37**) mittels Gewindeanschluß angeschlossen werden kann, und dass die Gewindebuchse (**5**) mit einem die Rohrachse (**8**) umgebenden und sich mit dieser drehenden Hülsenteil (**6**) vereinigt ist, in dem Schutzgaskanäle (**7**) vorgesehen sind, die mit der Schutzkammer (**3**) über zwischen dem Anschlußkopf (**4**) und der Schutzkammer (**3**) angeordnete Schläuche (**43**) verbunden sind.

7. Einrichtung nach Patentanspruch **1**,
**dadurch gekennzeichnet,**
**daß** zu den Mitteln (**25-30**) zum achsialen Bewegen des Elektrodenschafts (**1**) ein mit einer Gewindeachse (**30**) ausgerüsteter Motor (**29**) gehört.

8. Einrichtung nach Patentanspruch **1** oder **7**,
**dadurch gekennzeichnet,**
**daß** die achsiale Bewegung des Elektrodenschafts (**1**) so gesteuert ist, daß sie gleichzeitig mit der Drehbewegung des Elektrodenschafts (**1**) und der Rohrachse (**8**) und in Abhängigkeit von jener Bewegung erfolgt.

9. Einrichtung nach Patentanspruch **1**,
dadurch gekenn.zeichnet,
daß der Elektronenschaft (**1**) in der Rohrachse (**8**) über ein dazwischen vorgesehenes lsoliermaterialrohr (**9**) gelagert ist.

## Claims

1. Apparatus for welding cylindrical parts and rotary elements, the apparatus comprising:
- an electrode supporting shaft (**1**) which is a spindle that conducts the welding current to the welding electrode (**2**);
- a positioning and mounting device (**31**) for the parts to be welded (A, B); and
- a hollow shaft (**8**) enclosing the electrode supporting shaft (**1**), which is supported in bearings (**10**) and able to rotate with respect either to the supporting stage elements (**11, 12**) or to the electrode supporting shaft (**1**),
**characterized in that**
attached to the hollow shaft (**8**), there is a connecting head (**4**) provided with fixing elements (**5**) for an interchangeable protective chamber (**3**), that the interchangeable means of positioning and fixing (**31**) together with the protective chamber (**3**) are so arranged that they are attached to the connecting head (**4**) with the same clamping elements (**5**) as those with which the protective chamber (**3**) is clamped, and that the apparatus furthermore comprises:
- means (**13, 14, 15, 19**) of rotating the hollow shaft (**8**) together with the connecting head (4) and the protective chamber (**3**) attached to it with the means of positioning and fixing (**31**);
- means (**12', 17,16,18**) for locking the electrode supporting shaft (**1**) so that it cannot be rotated when the hollow shaft (**8**) rotates; and
- means (**25-30**) for moving the electrode supporting shaft (**1**) axially with respect to the hollow shaft (**8**).

2. Apparatus according to Claim **1**,
**characterized in that**
the above-mentioned means for positioning and fixing (**31**) are located in the protective chamber (**3**).

3. Apparatus according to Claim **2**,
**characterized in that**
the means for positioning and fixing (**31**) are part of an interchangeable mounting cassette and that damping and positioning elements (**39, 41, 50**) for the interchangeable mounting cassette (**31**) are provided in the protective chamber (**3**).

4. Apparatus according to Claim **3**,
**characterized in that**
the clamping and positioning elements include guides (**39**) by means of which the mounting cassette (**31**) can be pushed in a direction along the axis of the electrode supporting shaft (**1**) into the intended position inside the protective chamber (**3**).

5. Apparatus according to Claim **1**,
**characterized in that**
the apparatus includes means (**15-19**) with which the electrode supporting shaft (**1**) can be rotated while other means (**12', 13, 14**) render the hollow shaft (**8**) unrotatable.

6. Apparatus according to Claim **1**,
**characterized in that**
on the connecting head (**4**), a thread insert (**5**) is provided, to which threaded sleeves (**38, 37**) projecting from the protective chamber (**3**) can be fixed by threaded connections, and that the thread insert (**5**) is in one piece with a sleeve (**6**) enclosing the hollow shaft (**8**) and rotating as one with it, this sleeve (**6**) being provided with protective gas ducts (**7**) which are connected to the protective chamber (**3**) by means of tubes (**43**) between the connecting head (**4**) and the protective chamber (**3**).

7. Apparatus according to Claim **1**,
**characterized in that**
the means (**25-30**) for imparting an axial movement to the electrode supporting shaft (**1**) include a motor (**29**) equipped with a threaded spindle (**30**).

8. Apparatus according to Claims **1** or **7**,
**characterized in that**
the axial movement imparted to the electrode supporting shaft (**1**) is controlled in such a way that it occurs simultaneously with the rotary movement of the electrode supporting shaft (**1**) and the hollow shaft (**8**) and as a function of this movement.

9. Apparatus according to Claim **1**,
**characterized in that**
the electrode supporting shaft (**1**) in the hollow shaft (**8**) is supported in a bearing formed by a tube of insulating material (**9**).

## Revendications

1. Installation destinée au soudage de pièces cylindriques et d'éléments tournants et comprenant :
- une tige d'électrode (**1**) qui constitue un axe amenant le courant de soudage à l'électrode de soudage (**2**) ;
- des moyens de positionnement et de fixation (**31**) pour les pièces à souder (A, B) ;
et
- un axe tubulaire (**8**) entourant la tige d'électrode (**1**), placé de façon pivotante, aussi bien par rapport au cadre (**11, 12**) que par rapport à la tige d'électrode (**1**),
**caractérisée en ce**
**qu'**une tête de branchement (**4**) est fixée sur l'axe tubulaire (**8**), munie d'éléments de serrage (**5**) destinés à une chambre protectrice (**3**) interchangeable, en ce que les moyens de positionnement et de fixation interchangeables (**31**) raccordés à la chambre protectrice (**5**) sont placés de façon à être fixés à la tête de branchement (**4**) avec les mêmes éléments de serrage (**5**) que la chambre protectrice, et en ce que l'installation comprend en outre les éléments suivants :
- des éléments (**13, 14, 15, 19**) destinés à faire pivoter l'axe tubulaire (**8**) en même temps que la tête de branchement (**4**), la chambre protectrice (**3**) raccordée à celle-ci et les moyens de positionnement et de fixation (**31**) ;
- des éléments (**12', 17, 16, 18**) destinés à arrêter la tige d'électrode (**1**) de manière à ce qu'elle ne puisse pas pivoter pendant la rotation de l'axe tubulaire (**8**) ; et
- des moyens (**25** à **30**) destinés à faire bouger la tige d'électrode (**1**) de façon axiale par rapport à l'axe tubulaire (**8**).

2. Installation conforme à la revendication **1**,
**caractérisée en ce que**
les éléments de positionnement et de fixation (**31**) susmentionnés se trouvent dans la chambre protectrice (**3**).

3. Installation conforme à la revendication **2**,
**caractérisée en ce que**
les moyens de positionnement et de fixation (**31**) comprennent un châssis de fixation interchangeable et **en ce que** des éléments de serrage et de positionnement (**39, 41, 50**) sont prévus dans la chambre protectrice (**3**) pour le châssis de fixation interchangeable (**31**).

4. Installation conforme à la revendication **3**,
**caractérisée en ce que**
les éléments de serrage et de positionnement comprennent des glissières (**39**) le long desquelles peut être déplacé le châssis de fixation (**31**) dans la direction axiale de la tige d'électrode (**1**), dans la chambre protectrice (**3**), afin d'adopter la position prévue.

5. Installation conforme à la revendication **1**,
**caractérisée en ce**
**qu'**elle comprend des moyens (**15** à **19**) avec lesquels pivote la tige d'électrode (**1**), tandis que d'autres moyens (**12', 13, 14**) manoeuvrent l'axe tubulaire (**8**) de façon non pivotante.

6. Installation conforme à la revendication **1**,
**caractérisée en ce que**
une douille taraudée (**5**) est prévue sur la tête de branchement (**4**), sur laquelle peut être raccordé un manchon fileté (**38, 37**), saillant de la chambre protectrice (**3**), à l'aide d'un raccordement fileté, et **en ce que** la douille taraudée (**5**) est jointe à un élément de manchon (**6**) entourant l'axe tubulaire (**8**) et pivotant avec ce dernier, dans lequel sont prévus des canaux pour le gaz de protection (**7**) qui sont reliés à la chambre protectrice (**3**) par des tuyaux souples (**43**) placés entre la tête de branchement (**4**) et la chambre protectrice (**3**).

7. Installation conforme à la revendication **1**,
**caractérisée en ce que**
les moyens (**25** à **30**) destinés à faire bouger la tige d'électrode (**1**) en direction axiale comprennent un moteur (**29**) équipé d'un axe taraudé (**30**).

8. Installation conforme à la revendication **1** ou **7**,
**caractérisée en ce que**
le mouvement axial de la tige d'électrode (**1**) est commandé de façon à ce qu'il se produise en même temps que le mouvement tournant de la tige d'électrode (**1**) et de l'axe tubulaire (**8**) et en fonction de ce mouvement.

9. Installation conforme à la revendication **1**,
**caractérisée en ce que**
la tige d'électrode (**1**) est placée dans l'axe tubulaire (**8**) avec un tuyau en matériau isolant (**9**) intercalé entre eux.
